# EUROPEAN PATENT SPECIFICATION

(11) **EP 3 396 772 B1**
(45) Date of publication and mention of the grant of the patent: **07.01.2026**
(21) Application number: 16870227.2
(22) Date of filing: 03.08.2016
(51) Int. Cl.: H01M 10/058

(54) **LITHIUM ION SECONDARY BATTERY AND METHOD FOR MANUFACTURING SAME**
LITHIUM-IONEN-SEKUNDÄRBATTERIE UND VERFAHREN ZUR HERSTELLUNG DAVON
BATTERIE RECHARGEABLE AU LITHIUM-ION ET SON PROCÉDÉ DE FABRICATION

(30) Priority: 01.12.2015 JP 2015234959
(43) Date of publication of application: 31.10.2018
(73) Proprietor: AESC Japan Ltd., Zama-shi, Kanagawa 252-0012 (JP)
(72) Inventor: KIMURA, Aika, Zama-shi Kanagawa 252-0012 (JP); UWAI, Kenta, Zama-shi Kanagawa 252-0012 (JP); MIZUTA, Masatomo, Zama-shi Kanagawa 252-0012 (JP)
(74) Representative: Mathys & Squire
(86) International application number: PCT/JP2016/072838
(87) International publication number: WO 2017/094286

(56) References cited:
- CN-A- 105 787 140
- JP-A- 2015 022 957
- JP-A- 2015 522 902
- JP-A- H09 283 178
- JP-B2- 3 568 354
- US-A1- 2002 090 544

## Description

### TECHNICAL FIELD

The present invention relates to a lithium ion secondary battery and a method for manufacturing the same.

### BACKGROUND ART

Due to the increased attention to the environment protection movement in recent years, development of electric vehicles (EV) and hybrid electric vehicles (HEV) is accelerating. As a motor driving power supply for such vehicles, attention is being focused on the lithium ion secondary battery capable of repeated charging and discharging. A lithium ion secondary battery is a laminated battery formed by housing, in an insulating package, power generating elements comprising sheets of positive electrode and negative electrode which are laminated via a separator, together with an electrolytic solution. The package is formed by bonding insulating laminate films comprising a metal layer having insulating layers laminated on both sides thereof (see Patent Literature 1).

From JP 3 568354 B2 there is known a lithium ion secondary battery comprising a power generating element including a positive electrode and a negative electrode which are laminated via a separator; an electrolytic solution; and a package in which the power generating element and the electrolytic solution are disposed.

### CITATION LIST

### PATENT LITERATURE

PATENT LITERATURE 1: JP-A-2009-277397

### SUMMARY OF INVENTION

### PROBLEMS TO BE SOLVED BY THE INVENTION

However, in the lithium ion secondary battery, it has been difficult to design an appropriate amount of electrolytic solution. If the amount of electrolytic solution is too much, an electrolytic solution accumulation may be created between the positive electrode or negative electrode and the separator, or between the power generating elements and the package. An electrolytic solution accumulation causes non-uniform charge/discharge reactions. As a result, the lifetime of the lithium ion secondary battery may be decreased. On the other hand, if the amount of electrolytic solution is too little, the electrolytic solution may be more easily depleted. As a result, the lifetime of the lithium ion secondary battery may be likewise decreased.

An object of the present invention is to provide a lithium ion secondary battery including an appropriate amount of electrolytic solution and having a long lifetime, and a method for manufacturing the same.

### SOLUTION TO THE PROBLEMS

A lithium ion secondary battery according to an embodiment of the present is defined in claim 1.

According to another embodiment of the present invention, there is provided a method for manufacturing a lithium ion secondary battery as defined in claim 5.

### EFFECTS OF THE INVENTION

According to the present invention, a lithium ion secondary battery including an appropriate amount of electrolytic solution and having a long lifetime is provided.

### BRIEF DESCRIPTION OF THE DRAWINGS

Fig. 1 is a perspective view of a lithium ion secondary battery according to an embodiment of the present invention.
Fig. 2 is a cross sectional view taken along line II-II of the lithium ion secondary battery of Fig. 1.
Fig. 3 is a graph illustrating a correlation between a thickness variation amount, which is obtained by subtracting the thickness of the package from the thickness of the lithium ion secondary battery, and a thickness ratio.

### DESCRIPTION OF THE EMBODIMENTS

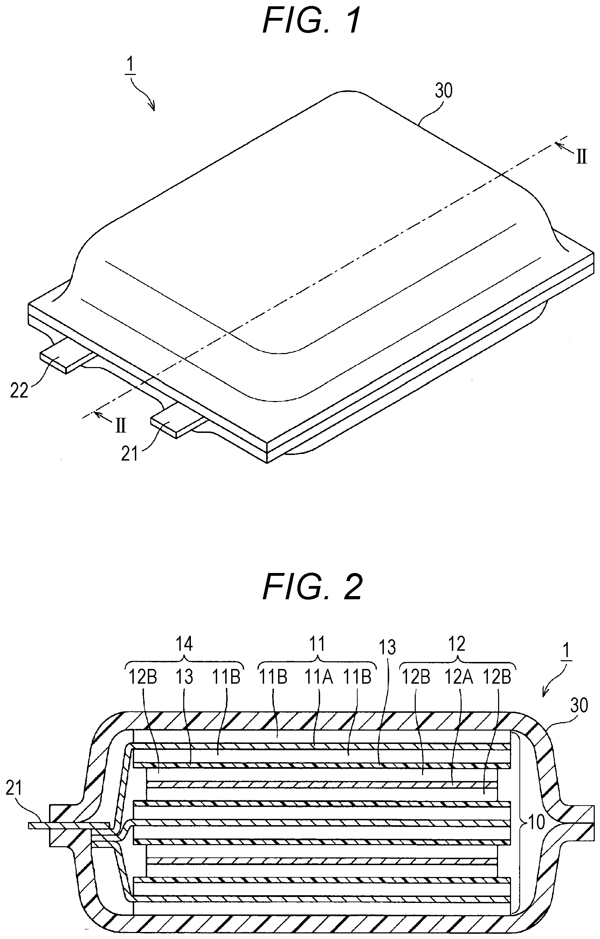

An embodiment of the present invention will be described. Figs. 1 and 2 illustrate a lithium ion secondary battery 1 according to the present embodiment, which is a laminated-type battery having a substantially rectangular, sheet-like exterior shape. The package 30 is internally provided with a power generating element 10 including negative electrodes 11 and positive electrodes 12 which are laminated via separators 13, and an electrolytic solution, which is not illustrated. The negative electrodes 11, the positive electrodes 12, and the separators 13 are in the form of films. Accordingly, the power generating element 10 is flat-plate shaped.

More specifically, the power generating element 10, as illustrated in Fig. 2, has a structure including a plurality of negative electrodes 11 and positive electrodes 12 which are alternately laminated via the separators 13. The negative electrodes 11 include negative electrode active material layers 11B, 11B formed on both major surfaces of a negative electrode current collector 11A. The negative electrode active material layers 11B, 11B contain a negative electrode active material capable of intercalation and deintercalation of lithium ions. The positive electrodes 12 include positive electrode active material layers 12B, 12B formed on both major surfaces of a positive electrode current collector 12A. The positive electrode active material layers 12B, 12B contain a positive electrode active material capable of intercalation and deintercalation of lithium ions. The example of Fig. 2 has a structure in which a plurality of layers comprising three negative electrodes 11 and two positive electrodes 12 is laminated alternately via four separators 13. It should be noted, however, that the number of the negative electrodes 11, the positive electrodes 12, or the separators 13 is not particularly limited.

In the power generating element 10, a single cell layer 14 is composed of a negative electrode active material layer 11B, a separator 13, and a positive electrode active material layer 12B that are adjacent to one another. In the lithium ion secondary battery 1 of the present embodiment, a plurality of cell layers 14 is laminated and thereby electrically connected in parallel.

On one side of the peripheral portion of the substantially rectangular package 30, a negative electrode terminal 21 and a positive electrode terminal 22 are provided. The negative electrode terminal 21 and the positive electrode terminal 22 are each led out of the inside of the package 30 in the same direction. The negative electrode terminal 21 and the positive electrode terminal 22 have end portions that are disposed in the package 30. The end portions are respectively connected to the negative electrode current collector 11A and the positive electrode current collector 12A of the power generating element 10 sealed in the package 30. In the present embodiment, the negative electrode terminal 21 and the positive electrode terminal 22 are provided on the same side of the peripheral portion of the package 30. It should be noted, however, that the negative electrode terminal 21 and the positive electrode terminal 22 may be provided on different sides. While the negative electrode terminal 21 and the positive electrode terminal 22 are led out in the same direction, the negative electrode terminal 21 and the positive electrode terminal 22 may be led out in different directions, such as in opposite directions.

In the lithium ion secondary battery 1 of the present embodiment which is configured as described above, a thickness obtained by subtracting the thickness of the package 30 from the thickness of the lithium ion secondary battery 1 is set to be not less than 1.05 times and not more than 1.15 times the thickness of the power generating element 10 in a state in which the electrolytic solution is not included.

Due to an electrolytic solution layer formed by the electrolytic solution held between the negative electrodes 11 or the positive electrodes 12 and the separators 13, the thickness of the lithium ion secondary battery 1 is increased. The negative electrodes 11, the positive electrodes 12, and the separators 13 have pores. Accordingly, when the members contact the electrolytic solution, the electrolytic solution is absorbed into the members. As a result, the thicknesses of the members are increased compared with the members before their contact with the electrolytic solution, i.e., in their material state. Accordingly, using the thickness obtained by subtracting the thickness of the package 30 from the thickness of the lithium ion secondary battery 1, it becomes possible to manage the amount of electrolytic solution held in the power generating element 10.

In the lithium ion secondary battery 1 of the present embodiment where the thickness obtained by subtracting the thickness of the package 30 from the thickness of the lithium ion secondary battery 1 is not less than 1.05 times and not more than 1.15 times the thickness of the power generating element 10 in a state in which the electrolytic solution is not included, the amount of electrolytic solution held in the power generating element 10 is appropriate. Thus, the accumulation of electrolytic solution held between the negative electrodes 11 or the positive electrodes 12 and the separators 13 is less likely to occur. In addition, the accumulation of electrolytic solution between the power generating element 10 and the package 30 is less likely to occur. When the accumulation of electrolytic solution held between the negative electrodes 11 or the positive electrodes 12 and the separators 13 is less likely to occur, the non-uniform charge/discharge reaction is less likely to occur. Accordingly, the lithium ion secondary battery 1 of the present embodiment has high cycle characteristics and a long lifetime. In addition, in the lithium ion secondary battery 1 of the present embodiment, the amount of the electrolytic solution held in the power generating element 10 is appropriate. Accordingly, depletion of electrolytic solution is less likely to occur, increasing the lifetime of the battery. Also, the thickness of the lithium ion secondary battery 1 is more likely to be uniform (thickness variation is less likely to occur). More preferably, the thickness obtained by subtracting the thickness of the package 30 from the thickness of the lithium ion secondary battery 1 is not less than 1.09 and not more than 1.14 the thickness of the power generating element 10 in a state in which the electrolytic solution is not included.

The "thickness obtained by subtracting the thickness of the package 30 from the thickness of the lithium ion secondary battery 1" means the thickness of the power generating element 10 sealed in the package 30 together with the electrolytic solution. The "thickness obtained by subtracting the thickness of the package 30 from the thickness of the lithium ion secondary battery 1" can be determined by, for example, measuring the thickness of the lithium ion secondary battery 1 and then subtracting the thickness of the material (such as a laminate film) of the package 30 that has been measured in advance.

The "thickness of the power generating element 10 in a state in which the electrolytic solution is not included" means the thickness of the power generating element 10 in a state in which the electrolytic solution is not included at all, or the thickness of the power generating element 10 in a state in which an amount of electrolytic solution is included such that the thickness is not influenced (for example, an amount such that the pores of the negative electrodes 11, the positive electrodes 12, and the separators 13 are filled). The "thickness of the power generating element 10 in a state in which the electrolytic solution is not included" can be determined, for example, by measuring the thickness of the power generating element 10 comprising the laminate of the negative electrodes 11, the positive electrodes 12, and the separators 13 before being contacted with the electrolytic solution. Alternatively, the thicknesses of the negative electrodes 11, the positive electrodes 12, and the separators 13 in their material state before being laminated may be measured before being contacted with the electrolytic solution, and then the thicknesses may be added up to determine the "thickness of the power generating element 10 in a state in which the electrolytic solution is not included".

It is also possible to determine the "thickness of the power generating element 10 in a state in which the electrolytic solution is not included" by removing the electrolytic solution from the power generating element 10 in a state in which the electrolytic solution is included to obtain the "state in which the electrolytic solution is not included", and then measuring the thickness of the power generating element 10. The method for removing the electrolytic solution from the power generating element 10 is not particularly limited. Example methods include centrifugation, drying, and pressurization.

The method for removing the electrolytic solution by pressurization is as follows. First, the power generating element 10 in a state in which the electrolytic solution is included is loaded to squeeze the electrolytic solution out of the power generating element 10. When the thickness cannot be decreased any more, the thickness is measured, and the thickness is defined as the "thickness of the power generating element 10 in a state in which the electrolytic solution is not included". In this method, the "thickness of the power generating element 10 in a state in which the electrolytic solution is not included" can be measured without disassembling the lithium ion secondary battery 1 or removing the power generating element 10 from the package 30.

The lithium ion secondary battery 1 of the present embodiment may be used for various purposes. For example, the lithium ion secondary battery 1 can be used in various vehicles, such as electric vehicles; hybrid vehicles (vehicles in which an internal combustion engine and an electric motor are used in combination as prime movers); motor bikes; electric power-assisted bicycles; and railroad vehicles. The lithium ion secondary battery 1 may also be used in aircraft, ships, agricultural machines, construction machines, transport machines, power tools, medical equipment, welfare equipment, robots, electricity storage devices, and the like. Other examples include portable devices, such as notebook personal computers, digital cameras, cell phone terminals, and portable gaming machine terminals.

In particular, a lithium ion secondary battery mounted on an electric vehicle or a hybrid vehicle is required to have a long lifetime due to its long period of use and frequent charging and discharging. Accordingly, the electrolytic solution tends to be depleted, and it is difficult to design an appropriate amount of electrolytic solution. Thus, the lithium ion secondary battery 1 of the present embodiment is particularly preferable as a lithium ion secondary battery to be mounted on an electric vehicle or a hybrid vehicle. When mounted on an electric vehicle or a hybrid vehicle, the capacity of the power generating element 10 of the lithium ion secondary battery 1 is preferably not less than 5 Ah and not more than 70 Ah.

In the following, the constituent elements of the lithium ion secondary battery 1 of the present embodiment will be described in greater detail.

### 1. Negative electrode terminal 21 and positive electrode terminal 22

The negative electrode terminal 21 and the positive electrode terminal 22 are configured of an electrically conductive metal foil. Specific examples of the metal foil include: metal foils made from single metals such as aluminum, copper, titanium, and nickel; and metal foils made from alloys such as aluminum alloy and stainless steel. The materials of the negative electrode terminal 21 and the material of the positive electrode terminal 22 may be the same or different. As in the present embodiment, the negative electrode terminal 21 and the positive electrode terminal 22 that have been separately prepared may be respectively connected to the negative electrode current collector 11A and the positive electrode current collector 12A. The negative electrode current collector 11A and the positive electrode current collector 12A may be respectively extended to form the negative electrode terminal 21 and the positive electrode terminal 22.

### 2. Negative electrodes 11

The negative electrodes 11 have the structure in which the negative electrode active material layers 11B, 11B are formed on both major surfaces of the negative electrode current collector 11A. The negative electrode active material layers 11B contain, for example, a negative electrode active material, a conductive agent, and a binding agent (binder). The conductive agent is contained in a dispersed state in the negative electrode active material layer 11B. The content of the binding agent in the negative electrodes 11 is set within a predetermined preferable range, whereby the negative electrode active material is bound in a state in which at least some of the negative electrode active material particles are coated by the binding agent.

### 2-1 Negative electrode current collector 11A

Examples of the material of the negative electrode current collector 11A include metals such as copper, nickel, and titanium, and alloys containing one or more of such metals (such as stainless steel).

### 2-2 Negative electrode active material

As the negative electrode active material, crystalline carbon materials, such as graphite, may be used. Specific examples of graphite include natural graphite; artificial graphite such as non-graphitizable carbon, graphitizable carbon, and low temperature-fired carbon; and mesocarbon fiber (MCF). One of the crystalline carbon materials may be used individually. Alternatively, two or more of the crystalline carbon materials may be used in a mixture.

### 2-3 Conductive agent

As the conductive agent, non-crystalline carbon materials, such as carbon black, or crystalline carbon materials, such as graphite, may be used. Specific examples of carbon black include Ketjenblack, acetylene black, channel black, lamp black, oil furnace black, and thermal black. Specific examples of graphite are the same as those indicated under 2-2. One of the carbon materials may be used individually. Alternatively, two or more of the carbon materials may be used in a mixture.

### 2-4 Binding agent

The binding agent is not particularly limited provided that the binding agent is capable of binding negative electrode active material particles and conductive agent particles. For example, fluorine resin may be used. Specific examples of fluorine resin include polyvinylidene fluoride and vinylidene fluoride-based polymers obtained by copolymerizing vinylidene fluoride with other fluorine-based monomers. The binding agent may be a binding agent consisting of fluorine resin, or a binding agent comprising a mixture of fluorine resin with other components, provided that the binding agent allows for permeation of the electrolytic solution.

### 3. Positive electrodes 12

The positive electrodes 12 have a structure in which the positive electrode active material layers 12B, 12B are formed on both major surfaces of the positive electrode current collector 12A. The positive electrode active material layers 12B contain, for example: a positive electrode active material; and a conductive agent and a binding agent which are added as needed. As the conductive agent and the binding agent, those that may be generally used in typical lithium ion secondary batteries (for example, those indicated under 2-3 and 2-4) may be selected as appropriate and used.

### 3-1 Positive electrode current collector 12A

As the material of the positive electrode current collector 12A, metals such as aluminum, nickel, and titanium, or alloys containing one or more of the metals (such as stainless steel) may be used.

### 3-2 Positive electrode active material

As the positive electrode active material, lithium containing oxides may be used, such as lithium cobalt oxide (LiCoO₂), lithium nickel oxide (LiNiO₂), lithium manganese oxide (LiMn₂O₄), and lithium nickel cobalt manganese oxide (NCM). One of the positive electrode active materials may be used individually. Alternatively, two or more of the positive electrode active materials may be used in a mixture.

### 4. Separators 13

The separators 13 are microporous films having a large number of micropores. The pores contain the electrolytic solution, whereby the electrolytic solution sealed in the package 30 is held by the separators 13. The material of the separators 13 is not particularly limited provided that the material is electrically insulating, electrochemically stable, and stable with respect to the electrolytic solution. Examples include microporous films of polyolefins such as polyethylene and polypropylene; fluorine resins such as polyvinylidene fluoride and polytetrafluoroethylene; polyesters such as polyethylene terephthalate; and polyamides such as aliphatic polyamide and aromatic polyamide (aramid).

As the material of the separators 13, it is also possible to use a resin composition containing a resin such as mentioned above and a filler. The type of the filler is not particularly limited provided that the filler is electrochemically stable and stable with respect to the electrolytic solution. Examples include inorganic particles and organic particles. Specific examples of inorganic particles include microparticles of metal oxides such as iron oxide, alumina, silica, titanium dioxide, and zirconia; and ceramics such as aluminum nitride and silicon nitride. Specific examples of organic particles include microparticles of resin such as cross-linked polymethacrylate methyl and cross-linked polystyrene.

Additionally, the separators 13 may include a heat-resistant layer coating the surface of a resin base material. The presence of the heat-resistant layer improves the thermal resistance and mechanical characteristics of the separators 13. The heat-resistant layer is configured from ceramic particles. The type of the ceramic is not particularly limited. Examples include alumina, silica, titanium dioxide, zirconia, aluminum nitride, silicon nitride, and silicon carbide.

The separators 13 absorb and hold the electrolytic solution. In particular, the heat-resistant layer tends to absorb the electrolytic solution, and therefore the electrolytic solution is preferentially absorbed by the heat-resistant layer. Accordingly, the amount of absorption of the electrolytic solution by the separators 13 including the heat-resistant layer may vary depending on the amount of absorption of the electrolytic solution by the heat-resistant layer. In other words, the amount of absorption of the electrolytic solution by the separators 13 including the heat-resistant layer is not constant, and the amount of absorption tends to vary. Accordingly, compared with the separators 13 not including the heat-resistant layer, it is difficult to predict the amount of electrolytic solution to be injected during the manufacture of the lithium ion secondary battery (i.e., it is more difficult to design an appropriate amount of electrolytic solution). Thus, the present invention is more preferable when a separator including a heat-resistant layer is used.

### 5. Electrolytic solution

As the electrolytic solution, it is possible to use a solution obtained by, for example, dissolving a lithium salt as an electrolyte in a non-aqueous solvent (organic solvent). The electrolytic solution is not limited to a liquid and may be a gel. The electrolytic solution may additionally contain a typical additive.

The type of lithium salt is not particularly limited provided that the salt dissociates in the non-aqueous solvent to generate lithium ions. Specific examples include lithium hexafluorophosphate (LiPF₆); lithium hexafluoroarsenate (LiAsF₆); lithium aluminum tetrachloride (LiAlCl₄); lithium perchlorate (LiClO₄); lithium tetrafluoroborate (LiBF₄); lithium hexafluoroantimonic acid (LiSbF₆); LiPOF₂, LiCF₃SO₃; LiCF₃CF₂SO₃; LiC(CF₃SO₂)₃; LiN(CF₃SO₂)₂; LiN(CF₃CF₂SO₂)₂; LiN(CF₃SO₂)(C₄F₉SO₂); and LiN(CF₃CF₂CO)₂. Among those lithium salts, it is particularly preferable to use lithium hexafluorophosphate or lithium tetrafluoroborate. One of the lithium salts may be used individually. Alternatively, two or more of the lithium salts may be used in combination.

Examples of the non-aqueous solvent include annular carbonates; linear carbonates; aliphatic carboxylate esters; γ-lactones; annular ethers; linear ethers; and at least one organic solvent selected from the group consisting of the fluorinated derivatives.

Specific examples of annular carbonates include ethylene carbonate, propylene carbonate, butylene carbonate, and fluorinated derivatives thereof. Specific examples of linear carbonates include dimethylcarbonate, diethyl carbonate, ethyl methylcarbonate, dipropyl carbonate, and fluorinated derivatives thereof.

Specific examples of aliphatic carboxylate esters include methyl formate, methyl acetate, ethyl acetate, ethyl propionate, and fluorinated derivatives thereof. Specific examples of γ-lactones include γ-butyrolactone and fluorinated derivatives thereof. Specific examples of annular ethers include dioxane, tetrahydrofuran, and 2-methyltetrahydrofuran. Specific examples of linear ethers include 1,2-ethoxyethane, ethoxy-methoxy ethane, diethyl ether, and fluorinated derivatives thereof.

Other specific examples of non-aqueous solvent include dimethylsulfoxide, 1,3-dioxolan, formaldehyde, acetamide, dimethylformamide, acetonitrile, propylnitrile, nitromethane, ethyl monoglyme, phosphate triester, trimethoxymethane, sulfolane, methylsulfolane, 1,3-dimethyl-2-yl ether, 1,3-propane sultone, anisole, N-methyl-2-pyrrolidone, and fluorinated carboxylate ester. One of the non-aqueous solvents may be used individually. Alternatively, two or more of the non-aqueous solvents may be used in combination.

### 6. Package 30

The package 30 may be a laminate package formed of a flexible laminate film comprising a laminate of a heat seal layer, a metal layer, and a protection layer. Alternatively, the package 30 may be formed as a square or cylindrical container of metal or resin, for example.

From the viewpoint of weight reduction and increasing battery energy density, a laminate package is preferable. A laminate-type lithium ion secondary battery using a laminate package as the package 30 also provides excellent heat dissipation.

The metal layer is formed of a metal foil (such as an aluminum foil or a SUS foil), for example. The heat seal layer coating the inner surface of the metal layer is formed from a heat-sealable resin (such as polyethylene or polypropylene). The protection layer coating the outer surface of the metal layer is formed from a highly durable resin (such as polyethylene terephthalate or nylon). It is also possible to use a laminate film comprising a larger number of layers.

The package 30 of the lithium ion secondary battery 1 illustrated in Figs. 1 and 2 has a dual-structure including one laminate film disposed on the lower side of the power generating element 10 and one laminate film disposed on the upper side thereof. The package 30 has a pouch shape obtained by overlapping and heat-sealing the four sides on the peripheral portions of the two laminate films. It should be noted, however, that the package 30 is not limited to such dual-structure, and may have a single-structure. Specifically, the package 30 may have a pouch shape obtained by overlapping and heat-sealing the three sides on the peripheral portion of a single relatively large laminate film that is folded (into two), with the power generating element 10 disposed therein (such that the power generating element 10 is sandwiched between laminate films).

### 7. Method for manufacturing lithium ion secondary battery 1

A method for manufacturing the lithium ion secondary battery 1 of the present embodiment will be described.

Predetermined blending amounts of graphite as a negative electrode active material, carbon black as a conductive agent, and a fluorine resin as a binding agent are dispersed in a solvent, such as N-methyl-2-pyrrolidone, obtaining a slurry. The slurry is applied to the negative electrode current collector 11A of copper foil and the like, and dried. In this way, the negative electrode active material layers 11B are formed, and the negative electrodes 11 are fabricated. The negative electrodes 11 may be compressed by roll pressing or other methods to adjust their density to an appropriate value.

Predetermined blending amounts of a lithium-manganese composite oxide as a positive electrode active material, a conductive agent, and a binding agent are dispersed in a solvent, such as N-methyl-2-pyrrolidone, obtaining a slurry. The slurry is applied to the positive electrode current collector 12A of aluminum foil and the like on a hot plate using a doctor blade and the like, and dried. In this way, the positive electrode active material layers 12B are formed, and the positive electrodes 12 are fabricated. The resultant positive electrodes 12 may be compressed by roll pressing or other methods to adjust their density to an appropriate value.

Then, the negative electrodes 11, the separators 13, and the positive electrodes 12 are laminated to form the power generating element 10. Thereafter, the negative electrode terminal 21 is attached to the negative electrodes 11. Also, the positive electrode terminal 22 is attached to the positive electrodes 12. The power generating element 10 is then sandwiched between a pair of laminate films in such a way that the distal ends of the negative electrode terminal 21 and the positive electrode terminal 22 respectively protrude out of the laminate films. The peripheral portions of the pair of laminate films except for one side thereof are heat-sealed to obtain the pouched package 30 having an opening portion.

Thereafter, an electrolytic solution containing a lithium salt such as lithium hexafluorophosphate and an organic solvent such as ethylene carbonate is injected into the package 30 via the opening portion. In this way, the electrolytic solution is contacted with the power generating element 10. Additionally, the power generating element 10 is impregnated with the electrolytic solution by vacuum processing and the like. The electrolytic solution is injected until the thickness obtained by subtracting the thickness of the package 30 from the thickness of the lithium ion secondary battery 1 is within a range of not less than 1.05 times and not more than 1.15 times the thickness of the power generating element 10 in a state in which the electrolytic solution is not included. For example, the thickness of the lithium ion secondary battery 1 is measured as appropriate while the electrolytic solution is injected little by little, and the injection is terminated when the thickness obtained by subtracting the thickness of the package 30 from the thickness of the lithium ion secondary battery 1 is within the range of not less than 1.05 times and not more than 1.15 times the thickness of the power generating element 10 in a state in which the electrolytic solution is not included. At the end of the injection of the electrolytic solution, the opening portion of the package 30 is heat-sealed to place the package 30 in sealed state. In this way, the laminate-type lithium ion secondary battery 1 is completed.

According to a method for manufacturing a typical lithium ion secondary battery, the amount of electrolytic solution held in the power generating element is managed by the amount of injection of the electrolytic solution into the package. In the method for manufacturing the typical lithium ion secondary battery, the amount of electrolytic solution that is held and absorbed in the power generating element may vary depending on the type, manufacturing lot, state (such as the state of electrolytic solution being held) and the like of the positive electrode, the negative electrode, and the separator constituting the power generating element. Accordingly, it has not been easy to predict the amount of electrolytic solution absorbed in the power generating element. In particular, when the lithium ion secondary battery is used in vehicles, or when a separator is used in which the surface of a resin base material is coated with a heat-resistant layer, it has been difficult to predict the amount of electrolytic solution absorbed in the power generating element. Thus, it has been difficult to manage the amount of electrolytic solution that is held in the power generating element to an appropriate amount through the amount of injection of the electrolytic solution. As a result, it has not been easy to manufacture a lithium ion secondary battery with neither a lack nor excess of the electrolytic solution.

In contrast, in the method for manufacturing the lithium ion secondary battery 1 according to the present embodiment, the amount of electrolytic solution that is injected is managed using the thickness obtained by subtracting the thickness of the package 30 from the thickness of the lithium ion secondary battery 1. This makes it possible to strictly control the amount of electrolytic solution that is absorbed and held in the power generating element 10. Thus, it becomes possible to easily manufacture a lithium ion secondary battery which is provided with an appropriate amount of electrolytic solution and which has a long lifetime. In addition, in the method for manufacturing the lithium ion secondary battery 1 according to the present embodiment, it becomes possible to manufacture a lithium ion secondary battery provided with an appropriate amount of electrolytic solution. Thus, the method is preferable as a method for manufacturing a lithium ion secondary battery for purposes where it is difficult to design an appropriate amount of electrolytic solution (for example, for vehicle purposes, or when a separator that includes a heat-resistant layer coating the surface of a resin base material is used).

The present embodiment is an example of the present invention, and the present invention is not limited to the present embodiment. Various modifications or improvements may be made to the present embodiment, and embodiments with such modifications or improvements may also be included in the present invention, as defined by the claims. For example, the lithium ion secondary battery 1 of the present embodiment is a laminated-type battery having a substantially rectangular, sheet-like exterior shape. The lithium ion secondary battery 1 of the present embodiment, however, may be a wound-type battery having a cylindrical exterior shape.

During the manufacture of the lithium ion secondary batteries 1, the thickness of each and every one of the lithium ion secondary batteries 1 to be manufactured may be measured to determine the amount of electrolytic solution injected. However, if the type, manufacturing lot, state (such as the state of electrolytic solution being held) and the like of the negative electrodes 11, the positive electrodes 12, and the separators 13 constituting the power generating element 10 are the same, it may be considered that the amount of electrolytic solution that is absorbed and held in the power generating element 10 is the same. Accordingly, once the amount of electrolytic solution to be injected is determined by measuring thickness during the manufacture of the first lithium ion secondary battery 1, the lithium ion secondary batteries 1 may be manufactured by injecting an amount of electrolytic solution equal to the determined amount of electrolytic solution, without performing thickness measurement.

In addition, in the method for manufacturing the lithium ion secondary battery 1 according to the present embodiment, the electrolytic solution is injected into the package 30 housing the power generating element 10 to contact the electrolytic solution with the power generating element 10, followed by the measurement of the thickness of the lithium ion secondary battery 1. When the thickness obtained by subtracting the thickness of the package 30 from the thickness of the lithium ion secondary battery 1 is within the range of not less than 1.05 times and not more than 1.15 times the thickness of the power generating element 10 in a state in which the electrolytic solution is not included, the injection of the electrolytic solution is terminated.

The method, however, is not a limitation, and it is also possible to manufacture the lithium ion secondary battery 1 by a method wherein a gel-like electrolytic solution (hereafter referred to as "gel electrolytic solution") is used as the electrolytic solution, for example, and the electrolytic solution is contacted with the power generating element 10 outside the package 30. For example, the gel electrolytic solution is applied to the separators 13 outside the package 30. Then, the thickness of the power generating element 10 obtained by laminating the negative electrodes 11 and the positive electrodes 12 via the separators 13 including the applied gel electrolytic solution is measured. In this case, the amount of gel electrolytic solution to be applied is designed such that the thickness of the power generating element 10 manufactured using the gel electrolytic solution is within the range of not less than 1.05 times and not more than 1.15 times the thickness of the power generating element 10 in a state in which the gel electrolytic solution is not included.

If the type, manufacturing lot, state (such as the state of electrolytic solution being held) and the like of the negative electrodes 11, the positive electrodes 12, and the separators 13 constituting the power generating element 10 are the same, it can be considered that the amount of electrolytic solution that is absorbed and held in the power generating element 10 is the same. Accordingly, by manufacturing the power generating element 10 by applying the same amount of gel electrolytic solution as the amount of gel electrolytic solution determined as described above to the separators 13 outside the package 30, and by housing the resultant power generating element 10 in the package 30, it becomes possible to manufacture the lithium ion secondary batteries 1 without measuring the thickness of each and every one of the lithium ion secondary batteries 1 to be manufactured.

### Examples

The present invention will be described more specifically by way of examples. Lithium ion secondary batteries having the same configuration as the lithium ion secondary battery illustrated in Figs. 1 and 2 with different thickness ratios were fabricated, and the amount of their thickness variations were measured. If the amount of electrolytic solution that is injected is too much, thickness variation will be caused in the lithium ion secondary battery and its thickness will become non-uniform. Accordingly, whether the amount of electrolytic solution is appropriate or not was evaluated depending on the amount of thickness variation. In the following, the materials of the lithium ion secondary batteries and the method for manufacturing the same will be described.

The thickness ratio refers to a ratio T1/T2 of a thickness T1 obtained by subtracting the thickness of the package from the thickness of a completed item of the lithium ion secondary battery, to a thickness T2 of the power generating element in a state in which the electrolytic solution is not included (the power generating element before being contacted with the electrolytic solution). The amount of thickness variation refers to the difference between a maximum value and a minimum value of four measurement values obtained by measuring the thickness in the vicinity of the four corners of the substantially rectangular sheet-like lithium ion secondary battery of the completed item.

### <Fabrication of negative electrode>

A spherical natural graphite powder (average particle size: 20 µm) coated with a non-crystalline carbon as a negative electrode active material, polyvinylidene fluoride as a binding agent, and carbon black as a conductive agent were added to a solvent of N-methyl-2-pyrrolidone (NMP) at solid content mass ratios of 96.5:3:0.5, and stirred. In this way, the materials were uniformly dispersed in NMP, and a slurry was fabricated. The resultant slurry was applied onto a copper foil with a thickness of 10 µm as a negative electrode current collector. Then, the slurry was heated at 125°C for 10 minutes to evaporate NMP, whereby a negative electrode active material layer was formed. The negative electrode active material layer was pressed, fabricating a negative electrode including the negative electrode active material layer applied to one surface of the negative electrode current collector.

### <Fabrication of positive electrode>

A Li_{1.1}Mn_{1.9}O₄ powder having a spinel structure (BET specific surface area 0.25 m²/g) and lithium nickel manganese cobalt oxide lithium (Ni/Li molar ratio 0.7, BET specific surface area 0.5 m²/g) as positive electrode active materials, polyvinylidene fluoride as a binding agent, and carbon black as a conductive agent at solid content mass ratios of 69:23:4:4 were added to a solvent of NMP.

To the mixture, 0.03 parts by mass of oxalic acid anhydride (molecular weight 126) as an organic water scavenger with respect to 100 parts by mass of a solid content obtained by removing NMP from the mixture was further added and stirred. In this way, the materials were uniformly dispersed, and a slurry was fabricated. The resultant slurry was applied onto an aluminum foil with a thickness of 20 µm as a positive electrode current collector. Then, the slurry was heated at 125°C for 10 minutes to evaporate NMP, whereby a positive electrode active material layer was formed. The positive electrode active material layer was further pressed, whereby a positive electrode including the positive electrode active material layer applied to one surface of the positive electrode current collector was fabricated.

### <Fabrication of lithium ion secondary battery>

The positive electrode fabricated as described above was cut to a rectangle with a width of 20 cm and a length of 21 cm. The negative electrode fabricated as described above was cut to a rectangle with a width of 21 cm and a length of 22 cm. A part measuring 5 cm × 1 cm on one side of the peripheral portion of each rectangle provides a non-active-material-applied portion for connecting the terminal. The active material layer is formed in the remaining 20 cm × 20 cm portion for the positive electrode, or in the remaining 21 cm×21 cm portion for the negative electrode. Of an aluminum positive electrode terminal with a width of 5 cm, a length of 3 cm, and a thickness of 0.2 mm, an end portion with a length of 1 cm was ultrasonic-welded to the non-active-material-applied portion of the positive electrode. Similarly, of a nickel negative electrode terminal of the same size as the positive electrode terminal, an end portion with a length of 1 cm was ultrasonic-welded to the non-active-material-applied portion of the negative electrode.

On both surfaces of a square separator with a side length of 22 cm and made from polyethylene and polypropylene, the negative electrode and the positive electrode were disposed such that the respective active material layers are opposed to each other via the separator, thereby obtaining a power generating element. Then, two rectangular aluminum laminate films with a width of 24 cm and a length of 25 cm were prepared. Portions with a width of 5 mm on three sides of the rectangular aluminum laminate films except for one long side were adhered by heat-sealing, whereby a pouched laminate package having an opening portion was fabricated. Into the laminate package, the power generating element was inserted in such a way that a gap of 1 cm was formed between one short side of the laminate package and the end of the power generating element.

An electrolytic solution injected into the laminate package was prepared as follows. Into a non-aqueous solvent in which ethylene carbonate (EC) and diethyl carbonate (DEC) were mixed at EC to DEC ratios of 30:70 (volume ratio), lithium hexafluorophosphate as the electrolyte was dissolved to a concentration of 1.0 mol/L. Into the solution, an additive of linear disulfonic acid ester was dissolved to a concentration of 0.5 mass %. In this way, the electrolytic solution was prepared.

The electrolytic solution was injected into the laminate package, and then vacuum processing was performed to impregnate the negative electrode, the positive electrode, and the separator of the power generating element with the electrolytic solution. Then, heat-sealing was performed under reduced pressure to seal the opening portion of the laminate package over a width of 5 mm, whereby lithium ion secondary batteries of Examples 1 to 5 and Comparative Example 1 were obtained. In Examples 1 to 5 and Comparative Example 1, the thickness ratios of the lithium ion secondary batteries were 1.092 times to 1.159 times, depending on the amount of electrolytic solution injected (see Table 1). The capacity of the lithium ion secondary batteries was approximately 30 Ah.

**[Table 1]**

| | Thickness ratio | Amount of thickness variation (mm) |
|---|---|---|
| Example 1 | 1.092 | 0.019 |
| Example 2 | 1.108 | 0.030 |
| Example 3 | 1.114 | 0.070 |
| Example 4 | 1.134 | 0.074 |
| Example 5 | 1.140 | 0.034 |
| Comparative Example 1 | 1.159 | 0.284 |

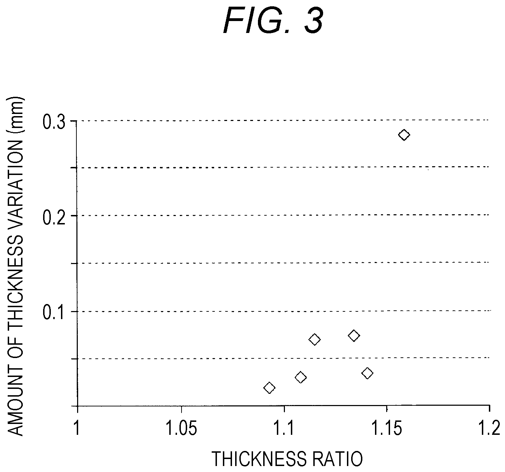

The amount of thickness variation of the lithium ion secondary batteries of Examples 1 to 5 and Comparative Example 1 obtained as described above were measured, and the results are shown in Table 1 and Fig. 3. As will be seen from Table 1 and Fig. 3, when the thickness ratio is not less than 1.05 times and not more than 1.15 times, the amount of variation in the thickness of the lithium ion secondary battery was small. Thus, the lithium ion secondary batteries having small thickness variation, i.e., a uniform thickness, were obtained. This indicates that the lithium ion secondary batteries of Examples 1 to 5 had an appropriate amount of electrolytic solution.

On the other hand, in Comparative Example 1, the thickness ratio of the lithium ion secondary battery was 1.159 times, which was outside the preferable range. Thus, the amount of thickness variation was large, and the thickness was not uniform. This indicates that the lithium ion secondary battery of Comparative Example had an excessive amount of electrolytic solution.

### LIST OF REFERENCE NUMERALS

- 1: Lithium ion secondary battery
- 10: Power generating element
- 11: Negative electrode
- 12: Positive electrode
- 13: Separator
- 30: Package

## Claims

1. A lithium ion secondary battery (1) comprising:a power generating element (10) including a positive electrode (12) and a negative electrode (11) which are laminated via a separator (13); an electrolytic solution; and a laminate package (30) in which the power generating element (10) and the electrolytic solution are disposed, wherein the laminate package (30) is formed of flexible laminate film comprising a laminate of a heat seal layer, a metal layer and a protection layer, wherein a thickness of a power generating element (10) containing the electrolytic solution obtained by subtracting a thickness of the package (30) from a thickness of the lithium ion secondary battery is not less than 1.05 times and not more than 1.15 times a thickness of the power generating element (10) in a state in which the electrolytic solution is not included.

2. The lithium ion secondary battery according to claim 1, wherein the separator includes a resin base material having a surface coated with a heat-resistant layer.

3. The lithium ion secondary battery according to claim 1 or claim 2, wherein the power generating element is flat-plate shaped.

4. The lithium ion secondary battery according to any one of claims 1 to 3, wherein the power generating element has a capacity of not less than 5 Ah and not more than 70 Ah.

5. A method for manufacturing a lithium ion secondary battery (1) comprising:a power generating element (10) including a positive electrode (12) and a negative electrode (11) which are laminated via a separator (13); an electrolytic solution; and a laminate package (30) in which the power generating element (10) and the electrolytic solution are disposed, wherein the laminate package (30) is formed of flexible laminate film comprising a laminate of a heat seal layer, a metal layer and a protection layer, the method comprising injecting the electrolytic solution into the power generating element (10) in such a way that a thickness of a power generating element (10) containing the electrolytic solution obtained by subtracting a thickness of the package (30) from a thickness of the lithium ion secondary battery is not less than 1.05 times and not more than 1.15 times a thickness of the power generating element (10) in a state in which the electrolytic solution is not included.

## Patentansprüche

1. Lithium-Ionen-Sekundärbatterie (1), umfassend: ein Energieerzeugungselement (10), einschließend eine positive Elektrode (12) und eine negative Elektrode (11), die mittels eines Separators (13) laminiert sind; eine Elektrolytlösung; und eine Laminatpackung (30), in der das Energieerzeugungselement (10) und die Elektrolytlösung angeordnet sind, wobei die Laminatpackung (30) aus einem flexiblen Laminatfilm gebildet ist, umfassend ein Laminat einer Heißsiegelschicht, eine Metallschicht und eine Schutzschicht, wobei eine Dicke eines Energieerzeugungselements (10), enthaltend die Elektrolytlösung, erhalten durch Subtrahieren einer Dicke der Packung (30) von einer Dicke der Lithium-Ionen-Sekundärbatterie, nicht weniger als das 1,05-fache und nicht mehr als das 1,15-fache einer Dicke des Energieerzeugungselements (10) in einem Zustand, in dem die Elektrolytlösung nicht eingeschlossen ist, beträgt.

2. Lithium-Ionen-Sekundärbatterie nach Anspruch 1, wobei der Separator ein Harzbasismaterial einschließt, aufweisend eine Oberfläche, die mit einer hitzebeständigen Schicht beschichtet ist.

3. Lithium-Ionen-Sekundärbatterie nach Anspruch 1 oder Anspruch 2, wobei das Energieerzeugungselement die Form einer flachen Platte aufweist.

4. Lithium-Ionen-Sekundärbatterie nach einem der Ansprüche 1 bis 3, wobei das Energieerzeugungselement eine Kapazität von nicht weniger als 5 Ah und nicht mehr als 70 Ah aufweist.

5. Verfahren zur Herstellung einer Lithium-Ionen-Sekundärbatterie (1), umfassend: ein Energieerzeugungselement (10), einschließend eine positive Elektrode (12) und eine negative Elektrode (11), die mittels eines Separators (13) laminiert sind; eine Elektrolytlösung; und eine Laminatpackung (30), in der das Energieerzeugungselement (10) und die Elektrolytlösung angeordnet sind, wobei die Laminatpackung (30) aus einem flexiblen Laminatfilm hergestellt ist, umfassend ein Laminat einer Heißsiegelschicht, eine Metallschicht und eine Schutzschicht, wobei das Verfahren ein Einspritzen der Elektrolytlösung in das Energieerzeugungselement (10) derart umfasst, dass eine Dicke eines Energieerzeugungselements (10), enthaltend die Elektrolytlösung, erhalten durch Subtrahieren einer Dicke der Packung (30) von einer Dicke der Lithium-Ionen-Sekundärbatterie, nicht weniger als das 1,05-fache und nicht mehr als das 1,15-fache einer Dicke des Energieerzeugungselements (10) in einem Zustand, in dem die Elektrolytlösung nicht eingeschlossen ist, beträgt.

## Revendications

1. Batterie secondaire au lithium-ion (1) comprenant : un élément de génération de puissance (10) incluant une électrode positive (12) et une électrode négative (11) qui sont laminées via un séparateur (13) ; une solution électrolytique ; et un boîtier laminé (30) dans lequel l'élément de génération de puissance (10) et la solution électrolytique sont disposés,
dans laquelle le boîtier laminé (30) est formé d'un film laminé flexible comprenant un laminé d'une couche de thermoscellage, d'une couche métallique et d'une couche de protection, dans laquelle une épaisseur d'un élément de génération de puissance (10) contenant la solution électrolytique obtenue en soustrayant une épaisseur du boîtier (30) d'une épaisseur de la batterie secondaire au lithium-ion n'est ni inférieure à 1,05 fois ni supérieure à 1,15 fois une épaisseur de l'élément de génération de puissance (10) dans un état dans lequel la solution électrolytique n'est pas incluse.

2. Batterie secondaire au lithium-ion selon la revendication 1, dans laquelle le séparateur inclut un matériau de base de résine ayant une surface revêtue avec une couche résistant à la chaleur.

3. Batterie secondaire au lithium-ion selon la revendication 1 ou la revendication 2, dans laquelle l'élément de génération de puissance est en forme de plaque plate.

4. Batterie secondaire au lithium-ion selon l'une quelconque des revendications 1 à 3, dans laquelle l'élément de génération de puissance a une capacité ni inférieure à 5 Ah ni supérieure à 70 Ah.

5. Procédé de fabrication d'une batterie secondaire au lithium-ion (1) comprenant : un élément de génération de puissance (10) incluant une électrode positive (12) et une électrode négative (11) qui sont laminées via un séparateur (13) ; une solution électrolytique ; et un boîtier laminé (30) dans lequel l'élément de génération de puissance (10) et la solution électrolytique sont disposés, dans lequel le boîtier laminé (30) est formé d'un film laminé flexible comprenant un laminé d'une couche de thermoscellage, d'une couche métallique et d'une couche de protection, le procédé comprenant l'injection de la solution électrolytique dans l'élément de génération de puissance (10) de telle sorte qu'une épaisseur d'un élément de génération de puissance (10) contenant la solution électrolytique obtenue en soustrayant une épaisseur du boîtier (30) d'une épaisseur de la batterie secondaire au lithium-ion n'est ni inférieure à 1,05 fois ni supérieure à 1,15 fois une épaisseur de l'élément de génération de puissance (10) dans un état dans lequel la solution électrolytique n'est pas incluse.
